Europäisches Patentamt

European Patent Office

Office européen des brevets

(11) Publication number: **0 048 344**
**B1**

(12) **EUROPEAN PATENT SPECIFICATION**

(45) Date of publication of patent specification: **02.01.86**

(21) Application number: **81106542.4**

(22) Date of filing: **22.08.81**

(51) Int. Cl.⁴: **C 08 K 3/22,** C 08 L 23/00,
C 08 K 5/13

(54) Stabilized titanium dioxide-pigmented polyolefin compositions.

(30) Priority: **19.09.80 US 188801**

(43) Date of publication of application:
**31.03.82 Bulletin 82/13**

(45) Publication of the grant of the patent:
**02.01.86 Bulletin 86/01**

(84) Designated Contracting States:
**AT BE CH DE FR GB IT LI LU NL SE**

(56) References cited:
**EP-A-0 010 346**
**FR-A-1 489 517**
**FR-A-2 106 095**
**GB-A-1 348 839**
**US-A-3 681 431**

(73) Proprietor: **AMERICAN CYANAMID COMPANY**
**1937 West Main Street P.O. Box 60**
**Stamford Connecticut 06904 (US)**

(72) Inventor: **Stretanski, Joseph A.**
**62 Lakeview Avenue**
**Clinton New Jersey 08809 (US)**
Inventor: **Loffelman, Frank Fred**
**1255 Cornell Road**
**Bridgewater New Jersey 08807 (US)**

(74) Representative: **Wächtershäuser, Günter, Dr.**
**Tal 29**
**D-8000 München 2 (DE)**

The file contains technical information
submitted after the application was filed and
not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to the stabilization of titanium dioxide-pigmented polyolefin compositions against degradation caused by actinic radiation, particularly UV-radiation. More particularly, it relates to the use of $C_{12}$—$C_{20}$ alkyl esters of 3,5-di-tert.butyl-4-hydroxybenzoic acid as light stabilizers for polypropylene, ethylenepropylene copolymer, and high-density polyethylene, containing a pigmenting amount of titanium dioxide. The invention particularly relates to the use of n-hexadecyl 3,5-di-tert.butyl-4-hydroxybenzoate as a light stabilizer for titanium dioxide-pigmented high-density polyethylene (HDPE).

Pigmented polyolefins have wide use in diverse products. $TiO_2$-pigmented HDPE, especially, finds wide use in camper tops, stadium seats, and food containers, particularly large storage containers for grain and the like. Presently used light stabilizers, such as certain 2-hydroxy-4-alkoxy benzophenones and nickel-n-butylamine complexes of 2,2'-thiobis(p-tert.octyl phenol), provide acceptable levels of protection against UV-degradation; however, there is a continuing need for improved light stabilizers, particularly for use in food containers. Tert.butylphenyl salicylate is believed to be the only compound acceptable for broad use in contact with food products; however, it is not a very effective light stabilizer.

In accordance with the present invention, it has been discovered that higher alkyl esters, that is $C_{12}$ to $C_{20}$ alkyl esters, of 3,5-di-tert.butyl-4-hydroxybenzoic acid provide unexpectedly high levels of protection against UV-degradation when used in titanium dioxide-pigmented polyolefins. Moreover, n-hexadecyl 3,5-di-tert.butyl-4-hydroxybenzoate provides exceptional light stability in titanium dioxide-pigmented high-density polyethylene.

U.S. Patent 3,206,431 discloses the use of alkyl esters of 3,5-di-tert.butyl-4-hydroxybenzoic acid as light stabilizers for polyolefins in combination with a hindered phenol antioxidant. U.S. Patents 3,681,431 and 3,285,855 disclose the use of n-octadecyl 3,5-di-tert.butyl-4-hydroxybenzoate as an antioxidant for polyolefins. British Patent 1,336,931 teaches the use of aryl esters of 3,5-di-tert.butyl-4-hydroxybenzoic acid as light stabilizers for polyolefins in combination with a benzophenone and a peroxide decomposer. U.S. Patent 3,502,613 teaches a synergistic combination of an aryl ester of 3,5-di-tert.butyl-4-hydroxybenzoic acid, a chlorobenzotriazole, a phenolic antioxidant, and a thiodipropionate ester as a light stabilizer for polypropylene. Finally, Stretanski, in EP—A—0010346 discloses a light stabilizer composition for polyolefins comprising n-hexadecyl 3,5-di-tert.butyl-4-hydroxybenzoate and a dialkyl pentaerythrityl diphosphite.

None of the aforementioned patents teach or suggest the high level of light stability provided to titanium dioxide-pigmented polyolefins by the incorporation therein of a $C_{12}$ to $C_{20}$ alkyl ester of 3,5-di-tert.butyl-4-hydroxybenzoic acid. Moreover, there is no suggestion that the incorporation of a higher alkyl ester of 3,5-di-tert.butyl-4-hydroxybenzoic acid into titanium dioxide-pigmented high-density polyethylene will provide unexpectedly high levels of light stability. The degree of light stability afforded by the esters of the present invention is unexpected, especially in $TiO_2$-pigmented high-density polyethylene, because a similar degree of protection is not realized with aryl esters, for example, the 2,4-di-tert.butylphenyl ester of 3,5-di-tert.butyl-4-hydroxybenzoic acid of the aforementioned British Patent, nor with other commonly used light stabilizers, such as 2-hydroxy-4-octyloxybenzophenone, 2-(2'-hydroxy-3',5'-di-tert.butylphenyl)-4-chlorobenzotriazole, or the nickel-butylamine complex of 2,2'-thiobis(p-tert.octylphenol).

The higher alkyl esters of 3,5-di-tert.butyl-4-hydroxybenzoic acid are known compounds, prepared according to procedures described in U.S. Patent 3,681,431 for the preparation of n-octadecyl analog, except that other higher alcohols are used instead of n-octadecanol.

The term "titanium dioxide-pigmented polyolefin" means any polyolefin to which the present invention relates, such as polypropylene, ethylene-propylene copolymer, and high-density polyethylene, containing at least about 2% by weight of $TiO_2$, although more may be used. Other pigments, of course, may be used in combination with $TiO_2$ in such polymer compositions to provide a wide range of colors and shades. Commonly used pigments for such purposes include cadmium red, chrome yellow, and molybdenum orange inorganic pigments, and diarylide yellow, Pigment Red 48, phthalocyanine blue and green organic pigments, and the like. The amount of such additional colorants used will vary widely and the invention is not limited to any amount.

The amount of $C_{12}$—$C_{20}$ alkyl ester used will generally fall within the range of about 0.1—2 percent by weight, although about 0.2—1 percent is generally effective. Although the benefits of the invention are provided by the use of the esters alone, additional benefits may be obtained by the use of a combination of the ester with a dialkyl pentaerythrityl diphosphite, as disclosed in the aforementioned Stretanksi application.

Other commonly used additives for polyolefins in general, and high-density polyethylene in particular, may be incorporated into the polymer, such as antioxidants, other light stabilizers, lubricants, and so forth.

Example 1

Two commercial grades of high density polyethylene (I, Rigidex®002-55P, British Petroleum; and II, Rumiten 2745, Rumianca®) were compounded with the light stabilizers shown in the following table, with and without the additional presence of 2.5 percent titanium dioxide. The compounds were incorporated into the polymer at a temperature of 175—185°C and compression molded into films at 180—185°C. The

**0 048 344**

films were exposed in a Xenotest 150 at 25±5°C/60+10% relative humidity using a rain cycle of 5 minutes spray, 25 minutes dry. The films were removed periodically and the carbonyl content determined. Failure is determined to occur at a change in carbonyl content of 0.05%.

Compounds tested were:

A. n-hexadecyl 3,5-di-tert.butyl-4-hydroxybenzoate

B. 2-hydroxy-4-octyloxybenzophenone

C. n-butylamine-nickel complex of 2,2'-thiobis(p-t.octylphenol)

D. 2-(2'-hydroxy-3',5'-di-tert.butylphenyl)-4-chlorobenzotriazole.

Data are shown in the accompanying table.

The data show that n-hexadecyl 3,5-di-tert.butylbenzoate (A) provides unexpectedly better light stability to titanium dioxide-pigmented high density polyethylene than other commonly used light stabilizer compounds.

TABLE I

Hours to $\Delta CO = 0.05\%$

| Stabilizer | Percent | Polymer I | | Polymer II | |
|---|---|---|---|---|---|
| | | Alone | +2.5% $TiO_2$ | Alone | +2.5% $TiO_2$ |
| None | — | 250 | 720 | 250 | 440 |
| A | 0.5 | 2900 | 5060 | 1390 | 4650 |
| B | 0.5 | 3150 | 960 | 870 | 860 |
| C | 0.5 | 3240 | 3850 | 1420 | 3470 |
| D | 0.5 | 1520 | 850 | 620 | 570 |

**Claims**

1. A composition stable toward degradation caused by actinic radiation comprising a polyolefin such as polypropylene, ethylene-propylene copolymers, and high-density polyethylene, at least about 2 percent by weight of titanium dioxide, and an actinic radiation stabilizing amount of a $C_{12}$ to $C_{20}$ alkyl ester of 3,5-di-tert.butyl-4-hydroxybenzoic acid.

2. The composition of Claim 1 wherein said polyolefin is high-density polyethylene.

3. The composition of Claim 1 wherein said polyolefin is a copolymer of ethylene and propylene.

4. The composition of Claim 2 wherein said ester is n-hexadecyl 3,5-di-tert.butyl-4-hydroxybenzoate.

5. The composition of Claim 1 wherein said ester comprises from about 0.1 to 2 percent by weight of said composition.

6. The composition of Claim 1 wherein said composition additionally contains a dialkyl pentaerythrityl diphosphite.

7. The composition of Claim 1 wherein said composition additionally contains one or more inorganic or organic colored pigments.

**Revendications**

1. Composition stable vis-à-vis d'une dégradation provoquée par un rayonnement actinique comprenant une polyoléfine choisie parmi les polypropylènes, copolymères éthylène-propylène, et polyéthylènes haute densité, au moins environ 2 pour cent en poids de bioxyde de titane et une quantité, à effet stabilisant au rayonnement actinique, d'un ester alkylique en $C_{12}$ à $C_{20}$ d'acide 3,5-di-tertio-butyl-4-hydroxybenzoïque.

2. Composition selon la revendication 1 dans laquelle ladite polyoléfine est du polyéthylène haute densité.

3. Composition selon la revendication 1, dans laquelle ladite polyoléfine est un copolymère d'éthylène et de propylène.

4. Composition selon la revendication 2, dans laquelle ledit ester est le 3,5-di-tertio-butyl-4-hydroxy-benzoate de n-hexadécyle.

5. Composition selon la revendication 1, dans laquelle ledit ester constitue environ 0,1 à 2 pour cent en poids de ladite composition.

6. Composition selon la revendication 1, dans laquelle ladite composition contient de plus un diphosphite de pentaérythrityle et de dialkyle.

7. Composition selon la revendication 1, dans laquelle ladite composition contient de plus un ou plusieurs pigments colorés organiques ou minéraux.

3

**Patentansprüche**

1. Eine gegenüber Abbau, verursacht durch actinische Bestrahlung, stabilisierte Masse, umfassend ein Polyolefin, wie Polypropylen, Ethylen-propylen-Copolymere und Polyethylen hoher Dichte, mindestens etwa 2 Gew.% Titandioxyd und eine zur Stabilisierung gegenüber actinischer Bestrahlung wirksame Menge eines $C_{12}$—$C_{20}$-Alkylesters vom 3,5-Di-tertiärbutyl-4-hydroxybenzosäure.

2. Masse nach Anspruch 1, wobei das Polyolefin Polyethylen hoher Dichte ist.

3. Masse nach Anspruch 1, wobei das Polyolefin ein Copolymeres von Ethylen und Propylen ist.

4. Masse nach Anspruch 2, wobei der Ester n-Hexadecyl-3,5-di-tertiärbutyl-4-hydroxybenzoat ist.

5. Masse nach Anspruch 1, wobei der Ester von etwa 0,1 bis 2 Gew.% der Masse ausmacht.

6. Masse nach Anspruch 1, wobei die Masse zusätzlich ein Dialkylpentaerythrityl-diphosphit enthält.

7. Masse nach Anspruch 1, wobei die Masse zusätzlich ein oder mehrere anorganische oder organische gefärbte Pigmente enthält.